# EUROPEAN PATENT APPLICATION

(11) **EP 4 729 473 A1**
(43) Date of publication of application: **22.04.2026**
(21) Application number: 25150964.2
(22) Date of filing: 09.01.2025
(51) Int. Cl.: C01B 17/02, H01M 4/36, H01M 4/58, H01M 10/0525, H01M 10/0567

(54) **LITHIUM SUPPLEMENT AND MANUFACTURING METHOD THEREFOR, CATHODE PLATE, AND SECONDARY BATTERY**

(30) Priority: 16.10.2024 CN 202411449213; 29.11.2024 CN 202411748295
(71) Applicant: Hubei Wanrun New Energy Technology Co., Ltd., Shiyan, Hubei 442500 (CN)
(72) Inventor: Wang, Qin, Hubei 442500 (CN); Peng, Tangping, Hubei 442500 (CN); Wang, Wei, Hubei 442500 (CN); LV, Fei, Hubei 442500 (CN)
(74) Representative: Michalski Hüttermann & Partner Patentanwälte mbB

(57) **Abstract**

The present application provides a lithium supplement, which includes a sulfide composite material including a first sulfide and a second sulfide doped in the first sulfide. The first sulfide includes lithium sulfide. The second sulfide is selected from a metal sulfide other than lithium sulfide, an organic sulfide, or a combination thereof.

## Description

### TECHNICAL FIELD

The present application relates to the technical field of energy storage, particularly to a lithium supplement and a manufacturing method therefor, a cathode plate, and a secondary battery.

### BACKGROUND

Lithium-ion batteries are widely used in the field of new energy, such as in new energy vehicles. During the charging and discharging processes of lithium-ion batteries, a certain amount of active lithium from the cathode is irreversibly consumed at the surface of the anode to form a solid electrolyte interphase (SEI) film, resulting in low initial-cycle efficiency and poor cycle life of the batteries.

Currently, the first-cycle efficiency is primarily improved by pre-lithiation or addition of lithium supplements. Common strategies for lithium supplementation mainly include cathode lithium supplementation and anode lithium supplementation. Anode lithium supplementation typically uses lithium powder, lithium foil, etc. as lithium supplements, which can pose safety risks. Cathode lithium supplementation typically uses lithium-rich compounds and binary lithium compounds as lithium supplements, which can be added directly during the slurry mixing process, with simple operation and high safety, making it a focal point of current research.

However, the current cathode lithium supplementation methods have problems such as easy gas production and poor lithium supplementation effects, which is not conducive to the effective improvement of the overall performance of the batteries.

### SUMMARY

In a first aspect, the embodiments of the present application provide a lithium supplement including a sulfide composite material. The sulfide composite material includes a first sulfide and a second sulfide doped in the first sulfide. The first sulfide includes lithium sulfide. The second sulfide is selected from a metal sulfide other than lithium sulfide, an organic sulfide, or a combination thereof.

In some embodiments, the metal sulfide includes sodium sulfide, calcium sulfide, potassium sulfide, or a combination thereof; and/or
the organic sulfide includes ammonium sulfide, sodium dithiocarbamate, sodium potassium dithiocarbamate, or a combination thereof; and/or,
a mass ratio of the first sulfide to the second sulfide in the sulfide composite material is (60 to 80):(15 to 30); and/or,
a molar ratio of sulfur element in the second sulfide to sulfur element in the first sulfide in the sulfide composite material is (0.1 to 0.31): (1.0 to 1.1).

In some embodiments, the lithium supplement further includes a carbon coating layer coated on a surface of the sulfide composite material.

A mass proportion of the carbon coating layer in the lithium supplement is 5% to 10%.

In some embodiments, the lithium supplement has a D50 particle size of 3 µm to 12 µm; and/or, the lithium supplement has a specific surface area of 2 m²/g to 10 m²/g.

In a second aspect, the embodiments of the present application provide a manufacturing method for a lithium supplement, including:
mixing a first lithium source and a first sulfur source, and then obtaining a first reaction solution through a first reaction treatment; and
mixing the first reaction solution with a reducing agent, a pH regulator, and a second sulfide, and then obtaining the sulfide composite material through a first purification treatment;

The first reaction solution includes a first sulfide. The first sulfide includes lithium sulfide. The second sulfide is selected from a metal sulfide other than lithium sulfide, an organic sulfide, or a combination thereof.

In some embodiments, the first purification treatment includes the following steps:
concentrating the first reaction solution mixed with the reducing agent, the pH regulator, and the second sulfide and obtaining crystals of the first sulfide and the second sulfide; and/or
the manufacturing method for the lithium supplement further includes:
   performing a solid-liquid separation on the crystallized material, and performing a washing and drying treatment on the separated solid material; and/or
the manufacturing method for the lithium supplement further includes:
   mixing a carbon material with the sulfide composite material, and then manufacturing the lithium supplement through a second reaction treatment; and/or
the second reaction treatment includes grinding and calcination, a time period of the grinding is 1h to 2h, and the calcination is performed in a protective atmosphere at a temperature of 200°C to 300°C for a time period of 5h to 8h.

In some embodiments, the manufacturing method for the lithium supplement satisfies at least one of the following conditions:
(1) the first reaction treatment is performed at a temperature of 30°C to 60°C for a time period of 30 min to 60 min;
(2) the concentration is vacuum concentration, a temperature of the concentration is 50°C to 80°C, and/or a Baume degree of a concentrated solution obtained by the concentration is 45 to 50;
(3) the crystals of the first sulfide and the second sulfide are obtained by performing a cooling treatment on the concentrated solution; or
(4) a mass ratio of the sulfide composite material to the carbon material that are mixed is (90 to 95): (5 to 10).

In some embodiments, the manufacturing method for the lithium supplement satisfies at least one of the following conditions:
(1) the first lithium source includes lithium sulfate, lithium oxalate, lithium carbonate, or a combination thereof, and the first sulfur source includes barium sulfide, calcium sulfide, or a combination thereof;
(2) the first lithium source and the first sulfur source both have a purity greater than or equal to 99.5%;
(3) the first lithium source and the first sulfur source both have a magnetic foreign matter content of less than 1 ppm;
(4) the reducing agent includes hydrazine hydrate, sulfite, or a combination thereof;
(5) the pH regulator includes a hydroxide selected from lithium hydroxide and/or a hydroxide of a metal corresponding to the metal sulfide other than lithium sulfide; or
(6) the carbon material includes CNT and/or graphene.

In a third aspect, the embodiments of the present application provide a cathode plate, including a current collector and a cathode material disposed on at least one side of the current collector in a thickness direction thereof. The cathode material includes the lithium supplement as described in the first aspect.

In a fourth aspect, the embodiments of the present application provide a secondary battery, including a cathode plate, an anode plate and a separator. The cathode plate is the cathode plate as described in the third aspect.

The above descriptions are only an overview of the technical solutions of the present application. In order to have a clearer understanding of the technical means of the present application and implement same according to the contents of the specification, and in order to make the above and other purposes, features, and advantages of the present application more apparent and understandable, the specific embodiments of the present application will be specifically listed below.

### BRIEF DESCRIPTION OF THE DRAWINGS

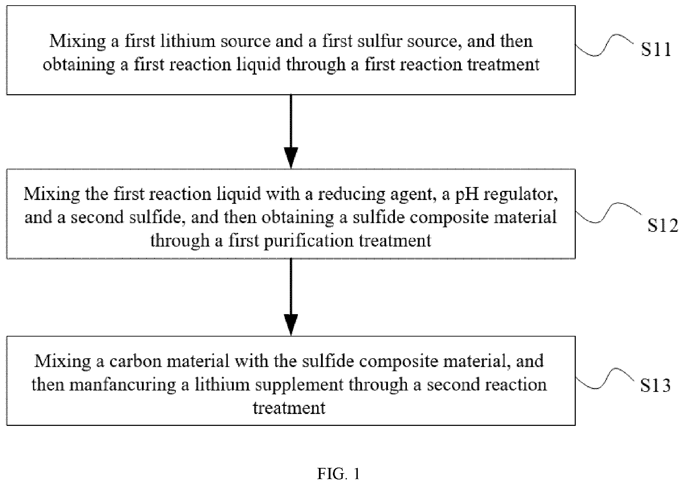

FIG.1 is a schematic flow chart of a manufacturing method for a lithium supplement provided according to embodiments of the present application.

### DETAILED DESCRIPTION OF THE EMBODIMENTS

Unless otherwise defined, all technical and scientific terms used herein have the same meaning as commonly understood by one of ordinary skill in the art to which the present application belongs. The terms used herein in the specification of the present application are for the purpose of describing the specific embodiments only, and are not intended to limit the present application. The terms "include", "comprise", and any variations thereof in the specification and claims as well as the foregoing description of drawings in the present application are intended to cover non-exclusive inclusions.

In the description of the embodiments of the present application, the technical terms "first", "second", etc. are only used to distinguish between different objects and shall not be understood as indicating or implying the relative importance, nor as implying the quantity, particular order, or primary and secondary relation of the indicated technical features. In the description of the embodiments of the present application, unless otherwise explicitly and specifically defined, "a plurality of" means two or more.

Reference herein to "embodiment" means that a particular feature, structure, or characteristic described in connection with the embodiment can be included in at least one embodiment of the present application. This phrase appeared at various places in the specification does not necessarily refer to the same embodiment, nor are they mutually exclusive independent or alternative embodiments. It can be understood by those skilled in the art, both explicitly and implicitly, that the embodiments described in the present application can be combined with other embodiments.

In the description of the embodiments of the present application, the term "and/or" is merely a description of an association relationship of the associated objects, indicating that three kinds of relationships can exist, for example, A and/or B indicates the existence of A alone, the existence of A and B at the same time, and the existence of B alone. In addition, the character "/" used herein generally indicates that the associated objects before and after are in an "or" relationship.

In the description of the embodiments of the present application, the term "a plurality of" means two or more (including two). Likewise, "a plurality of groups" means two or more groups (including two groups), and "a plurality of plates" means two or more plates (including two plates).

In the description of the embodiments of the present application, the orientation and position relationships indicated by the technical terms "center", "lengthwise", "crosswise", "length", "width", "thickness", "up", "down", "front", "back", "left", "right" , "vertical", "horizontal", "top", "bottom", "inside", "outside", "clockwise", "counterclockwise", "axial", "radial" and "circumferential", etc., are based on the orientation or position relationship as shown in the accompanying drawings, it is only for the convenience of describing the embodiments of the present application and simplifying the description, rather than indicating or implying that the device or element referred to thereby must have a specific orientation and be constructed and operated in a specific orientation, and thus it cannot be understood as limitations on the embodiments of the present application.

In the description of the embodiments of the present application, unless otherwise specified and limited, the terms "installation", "interconnection", "connection", "fixation", and the like should be understood in a broad sense, for example, it can be either fixed connection, or detachable connection, or integrated connection; it can be either mechanical connection or electrical connection; and it can be either direct connection, or indirect connection through intermediate media, or it can be the internal communication between two components or the interaction between two components. For those of ordinary skill in the art, the specific meanings of the above terms in the embodiments of the present application can be understood according to the specific situations.

Among common cathode lithium supplement materials, lithium-rich compounds such as lithium-rich lithium ferrite and lithium nickelate have the problems such as relatively high price, poor air stability, complex manufacturing process, and tendency to produce gas and residues, which hinder their ability to effectively improve the overall performance of the batteries.

In order to solve the above technical problems, the present application provides a lithium supplement and a manufacturing method therefor, a cathode plate, and a secondary battery, wherein lithium sulfide in the lithium supplement is used to supplement lithium, and upon the removal of lithium from the lithium sulfide, the residual sulfur bonds with a second sulfide to form, for example, polysulfides, etc., which prevents the formation of elemental sulfur after lithium is removed from the lithium sulfide, reduces the amount of elemental sulfur dissolved in the electrolyte, and minimizing the elemental sulfur that passes through the separator and deposits on the anode or the separator, thereby reducing the impact of the elemental sulfur residue on the performance of the battery, improving the performance stability of the battery, and effectively improving the overall performance of the battery.

The electrical device provided in the embodiments of the present application can be, but is not limited to, a mobile phone, a tablet, a laptop computer, an electric toy, an electric tool, an electric bicycle, an electric vehicle, a ship, a spacecraft, etc. Among them, the electric toy can include a fixed or mobile electric toy, such as a game machine, an electric car toy, an electric ship toy, and an electric airplane toy, etc., and the spacecraft can include an airplane, a rocket, a space shuttle, and a spaceship, etc.

In a first aspect, the embodiments of the present application provide a lithium supplement including a sulfide composite material. The sulfide composite material includes a first sulfide and a second sulfide doped in the first sulfide. The first sulfide includes lithium sulfide. The second sulfide is selected from a metal sulfide other than lithium sulfide, an organic sulfide, or a combination thereof.

The second sulfide contains at least a metal sulfide other than lithium sulfide, an organic sulfide, or a combination thereof. The second sulfide can be any sulfide that can bond with sulfur produced from the lithium sulfide after removing lithium, to fix the sulfur produced from the lithium sulfide after its removal of lithium, thereby preventing the elemental sulfur produced from the lithium sulfide after removing lithium from being dissolved or deposited on the separator.

The principle of the second sulfide fixing the sulfur produced from the lithium sulfide after removing lithium is described as follows:
When the lithium supplement provided in the embodiments of the present application is used in a cathode material, the lithium sulfide in the lithium supplement can be used to supplement lithium. Upon the removal of lithium from the lithium sulfide, the residual sulfur can bond with the second sulfide to form, for example, polysulfides, thereby preventing the formation of elemental sulfur after the lithium in the lithium sulfide is removed. The solubility of the product of the sulfur bonding with the second sulfide in the electrolyte is lower than the solubility of elemental sulfur in the electrolyte. For example, polysulfide is less likely to dissolve in the electrolyte and to pass through the separator to deposit on the anode or the separator, which prevents the elemental sulfur from dissolving into the electrolyte, passing through the separator, and depositing on the anode or the separator, thereby reducing the impact of the elemental sulfur residue on the performance of the battery, improving the performance stability of the battery, and effectively improving the overall performance of the battery.

In some embodiments, the metal sulfide can include sodium sulfide, calcium sulfide, potassium sulfide, or a combination thereof; and/or, the organic sulfide includes ammonium sulfide, sodium dithiocarbamate, sodium potassium dithiocarbamate, or a combination thereof.

In some embodiments, in the sulfide composite material, a mass ratio of the first sulfide to the second sulfide is (60-80):(15-30). For example, the mass ratio of the second sulfide to the first sulfide is 60:15, 60:18, 60:20, 60:23, 60:25, 60:28, 60:30, 65:16, 65:17, 65:20, 65:22, 65:25, 65:28, 65:30, 70:15, 70:18, 70:20, 70:23, 70:25, 70:29, 70:30, 75:15, 75:17, 75:20, 75:22, 75:25, 75:28, 75:30, 80:15, 80:17, 80:21, 80:24, 80:25, 80:28, or 80:30.

In these embodiments, by controlling the mass ratio of the first sulfide to the second sulfide to be (60-80):(15-30), both lithium supplementation and sulfur fixation effects can be achieved.

In some embodiments, in the sulfide composite material, a molar ratio of sulfur element in the second sulfide to sulfur element in the first sulfide is (0.1-0.31): (1.0-1.1). For example, the molar ratio of sulfur element in the second sulfide to sulfur element in the first sulfide can be 0.1:1.0, 0.2:1.0, 0.3 :1.0, 0.1:1.1, 0.2:1.1, 0.3:1.1, or 0.31:1.1.

In these embodiments, by controlling the molar ratio of sulfur element in the second sulfide to sulfur element in the first sulfide to be (0.1-0.31) :(1.0-1.1), both lithium supplementation and sulfur fixation effects can be achieved.

In some embodiments, the lithium supplement further includes a carbon coating layer. The carbon coating layer is coated on a surface of the sulfide composite material.

In these embodiments, by coating the sulfide composite material with the carbon coating layer, the electron conductivity of the lithium supplement can be effectively improved.

In some embodiments, in the lithium supplement, a mass proportion of the carbon coating layer is 5% to 10%. For example, the mass proportion of the carbon coating layer can be 5%, 6%, 7%, 8%, 9%, or 10%.

In these embodiments, when the mass proportion of the carbon coating layer is 5% to 10%, the electron conductivity of the lithium supplement can be effectively improved without affecting the lithium ion transportation.

In some embodiments, the lithium supplement has a D50 particle size of 3 µm to 12 µm; and/or the lithium supplement has a specific surface area of 2 m²/g to 10 m²/g.

For example, the D50 particle size of the lithium supplement can be 3 µm, 4 µm, 5 µm, 6 µm, 7 µm, 8 µm, 9 µm, 10 µm, 11 µm, or 12 µm. The D50 particle size can be determined using a laser particle size distribution analyzer. The D50 particle size refers to a particle size at which 50% of the cumulative volume distribution of the lithium supplement is achieved. For another example, the specific surface area of the lithium supplement can be 2 m²/g, 3 m²/g, 4 m²/g, 5 m²/g, 6 m²/g, 7 m²/g, 8 m²/g, 9 m²/g, or 10 m²/g.

In these embodiments, the D50 particle size and the specific surface area of the lithium supplement are within a suitable range such that the lithium supplement has a high compaction density, thereby improving the energy density of the lithium supplement.

In some embodiments, the content of a magnetic foreign matter in the lithium supplement is 0.11 ppm to 0.20 ppm. For example, the content of the magnetic foreign impurity in the lithium supplement can be 0.11 ppm, 0.12 ppm, 0.13 ppm, 0.14 ppm, 0.15 ppm, 0.16 ppm, 0.17 ppm, 0.18 ppm, 0.19 ppm, or 0.20 ppm. This can reduce the influence of the magnetic foreign matter on battery performance.

In some embodiments, the content of moisture in the lithium supplement is 125 ppm to 530 ppm. For example, the content of moisture in the lithium supplement can be 125 ppm, 127 ppm, 130 ppm, 140 ppm, 150 ppm, 160 ppm, 170 ppm, 180 ppm, 190 ppm, 200 ppm, 210 ppm, 215 ppm, 220 ppm, 225 ppm, 230 ppm, 240 ppm, 247 ppm, 260 ppm, 270 ppm, 280 ppm, 290 ppm, 296 ppm, 311 ppm, 312 ppm, 340 ppm, 350 ppm, 370 ppm, 390 ppm, 400 ppm, 410 ppm, 420 ppm, 430 ppm, 440 ppm, 450 ppm, 459 ppm, 470 ppm, 785 ppm, 500 ppm, 527 ppm, or 530 ppm.

In these embodiments, the content of moisture in the lithium supplement is relatively low, which can effectively reduce the hydrolysis of lithium sulfide and the second sulfide, thereby improving the lithium supplementation effect.

In some embodiments, the compaction density of the lithium supplement is 2.01 g/mL to 2.15 g/mL. For example, the compaction density of the lithium supplement can be 2.01 g/mL, 2.03 g/mL, 2.05 g/mL, 2.10 g/mL, 2.11 g/mL, 2.13 g/mL, 2.14 g/mL, or 2.15 g/mL.

In these embodiments, the lithium supplement has a relatively large compaction density and a relatively high energy density.

In a second aspect, the present application provides a manufacturing method for a lithium supplement. As shown in FIG.1, the manufacturing method includes the following steps S11 to S12:

S 11. Mixing a first lithium source and a first sulfur source, and then obtaining a first reaction solution through a first reaction treatment. The first reaction solution includes a first sulfide. The first sulfide includes lithium sulfide.

The first reaction can be a double replacement reaction.

In some embodiments, the first lithium source includes lithium sulfate, lithium oxalate, lithium carbonate, or a combination thereof, and the first sulfur source includes barium sulfide, calcium sulfide, or a combination thereof.

In these embodiments, when the above-mentioned first lithium source and first sulfur source are used, the double replacement reaction is performed in the first reaction treatment to obtain a lithium sulfide solution with a precipitate of barium sulfate, barium oxalate, or calcium sulfate, which facilitates the subsequent solid-liquid separation to obtain lithium sulfide with a relatively high purity.

In some embodiments, the molar ratio of sulfur element in the first sulfur source to lithium element in the first lithium source can be 0.5:(1.0 to 1.1). For example, the molar ratio of sulfur element in the first sulfur source to lithium element in the first lithium source can be 0.5:1.0 or 0.5:1.1, etc.

In these embodiments, it is convenient for the first sulfur source and the first lithium source to react in accordance with the stoichiometric ratio, thereby obtaining lithium sulfide with a relatively high purity and preventing the formation of lithium polysulfide or other impurities.

In some embodiments, the first lithium source and the first sulfur source both have a purity greater than or equal to 99.5%. The purity is represented by a mass fraction, that is, the mass fractions of the first lithium source and the first sulfur source are greater than or equal to 99.5%, that is, the mass fraction of the impurities is less than or equal to 0.5%.

In these embodiments, the purity of the reaction product, lithium sulfide, can be improved while reducing the introduction of impurities.

In some embodiments, a content of magnetic foreign matters in the first lithium source or the first sulfur source is less than 1 ppm. The content of the magnetic foreign matter refers to a mass content, that is, the mass content of the magnetic foreign matter in the first lithium source or the first sulfur source is less than 1 ppm.

In these embodiments, by controlling the content of the magnetic foreign matter in the first lithium source or the first sulfur source to be less than 1 ppm, it is helpful to reduce the content of the magnetic foreign matter, reduce the content of the magnetic foreign matter in the final product, or reduce the difficulty of removing the magnetic foreign matter from the final product.

In some embodiments, a temperature of the first reaction treatment can be 30°C to 60°C, and a time period of the first reaction treatment can be 30 min to 60 min. For example, the temperature of the first reaction treatment can be 30°C, 40°C, 50°C, 60°C, etc., and the time period of the first reaction treatment can be 30 min, 35 min, 40 min, 45 min, 50 min, 55 min, 60 min, etc.

In these embodiments, by controlling the temperature of the first reaction treatment to be 30°C to 60°C and the time period of the first reaction treatment to be 30 min to 60 min, the first sulfur source and the first lithium source can react quickly, thereby improving the reaction efficiency.

S12, mixing the first reaction solution with a reducing agent, a pH regulator, and a second sulfide, and then obtaining a sulfide composite material through a first purification treatment.

In some embodiments, the second sulfide is selected from a metal sulfide other than lithium sulfide, an organic sulfide, or a combination thereof.

The addition of the reducing agent effectively avoids the oxidation of sulfide ions, thereby maintaining the performance stability of the first sulfide and the second sulfide in the sulfide composite material. Since the first sulfide and the second sulfide will be hydrolyzed by water to generate hydroxides, the pH regulator can include a hydroxide which, when added, can effectively inhibit the hydrolysis of the first sulfide and the second sulfide during the first purification treatment. The presence of the reducing agent and the hydroxide is conducive to the purification of the first sulfide and the second sulfide, thereby reducing impurities.

In some embodiments, the reducing agent can include hydrazine hydrate, sulfite, or a combination thereof.

In these embodiments, hydrazine hydrate as a reducing agent can generate nitrogen gas, so no new impurity will be introduced into the sulfide composite material.

The concentration and addition amount of the reducing agent are not specifically limited, as long as the reducing effect described above can be achieved and the oxidization of the sulfide composite material can be prevented.

In some embodiments, when the reducing agent includes hydrazine hydrate, a hydrazine hydrate solution is mixed with the first reaction solution, the pH regulator, and the second sulfide. The mass fraction of hydrazine hydrate in the hydrazine hydrate solution can be 20% to 30%. For example, the mass fraction of hydrazine hydrate in the hydrazine hydrate solution can be 20%, 22%, 25%, 28% or 30%, etc. The solvent used in the hydrazine hydrate solution can be the same as the solvent in the first reaction solution. In some embodiments, the pH regulator includes a hydroxide selected from lithium hydroxide and/or a hydroxide of a metal corresponding to the metal sulfide other than the lithium sulfide.

In these embodiments, the addition of hydroxide can effectively inhibit the hydrolysis of the corresponding metal sulfide and/or lithium sulfide.

In some embodiments, in order to further reduce the introduction of impurities, the hydroxide can be of battery grade.

In some embodiments, the second sulfide can be selected from metal sulfides including sodium sulfide, calcium sulfide, potassium sulfide, or a combination thereof. The second sulfide can be selected from organic sulfides including ammonium sulfide, sodium dithiocarbamate, potassium sodium dithiocarbamate, or a combination thereof.

In some embodiments, the molar ratio of the reducing agent, the hydroxide ion in the hydroxide, the lithium sulfide, and the sulfur element in the second sulfide is (0.05-0.1): (0.02-0.05): (1.0-1.1): (0.1-0.31). For example, the molar ratio of the reducing agent, the hydroxide ion in the hydroxide, the lithium sulfide, and the sulfur element in the second sulfide can be 0.05:0.02:1.0:0.1, 0.05:0.03:1.0:0.1, 0.05:0.05:1.0:0.1, 0.05:0.02:1.1:0.1, 0.05:0.02:1.0:0.2, 0.05:0.02:1.0:0.31, 0.05:0.03:1.1:0.2, 0.05:0.03:1.1:0.31, 0.05:0.05:1.1:0.2, 0.05:0.05:1.1:0.31, 0.08:0.02:1.0:0.1, 0.08:0.03:1.0:0.1, 0.08:0.03:1.1:0.1, 0.08:0.03:1.1:0.2, 0.1:0.02:1.0:0.1, 0.1:0.05:1.0:0.1, 0.1:0.05:1.1:0.2, 0.1:0.05:1.0:0.31, etc.

In these embodiments, by controlling the molar ratio of the reducing agent, the hydroxide ion in the hydroxide, the lithium sulfide, and the sulfur element in the second sulfide within the above range, the introduction of impurities can be minimized while effectively preventing the oxidation and hydrolysis of the lithium sulfide and the second sulfide.

In some embodiments, the first purification treatment in S12 includes the following steps:
concentrating the first reaction solution mixed with the reducing agent, the pH regulator, and the second sulfide, and obtaining crystals of the first sulfide and the second sulfide, thereby purifying the first sulfide and the second sulfide.

In these embodiments, the first sulfide and the second sulfide can be purified by dissolving the first sulfide and the second sulfide in the first reaction solution and crystallizing the first sulfide and the second sulfide. The first purification treatment process is simple and easy to implement, and can improve the purity of the sulfide composite material at low cost.

In some embodiments, the concentration is vacuum concentration, and the temperature of the concentration is 50°C to 80°C.

In some embodiments, the Baume degree of the concentrated solution finally obtained after the concentration is 45 to 50. For example, the temperature of the concentration can be 50°C, 55°C, 60°C, 65°C, 70°C, 75°C, 80°C, etc. For another example, the Baume degree of the concentrated solution after the concentration can be 45, 46, 47, 48, 49, 50, etc.

In these embodiments, by using the vacuum concentration, the temperature of the concentration can be effectively reduced, thereby reducing the damage to the sulfide composite material caused by high temperature. Additionally, by controlling the temperature and the Baume degree of the concentrated solution after the concentration, the crystallization and the precipitation of the lithium sulfide and the second sulfide can be effectively promoted and the precipitation of impurities can be reduced.

In some embodiments, the crystals of the first sulfide and the second sulfide can be obtained by performing a cooling treatment on the concentrated solution. That is, the first sulfide and the second sulfide can be crystallized by cooling the concentrated solution. The temperature of the crystallization is 10°C to 25°C, and the cooling rate is 10°C/h to 15°C/ h. For example, the temperature of the crystallization can be 10°C, 12°C, 15°C, 17°C, 19°C, 20°C, 22°C, 24°C, 25°C, etc. For another example, the cooling rate can be 10°C/h, 12°C/h, 13°C/h, 14°C/h, or 15°C/h.

In these embodiments, by crystallizing the first sulfide and the second sulfide by cooling the concentrated solution at a temperature of 10°C to 25°C and a cooling rate of 10°C/h to 15°C/h, lithium sulfide and the second sulfide can be crystallized from the first reaction solution in proportion, thus reducing losses.

In some embodiments, the manufacturing method for the lithium supplement further includes performing a solid-liquid separation on the crystallized material, and performing a washing and drying treatment on the separated solid material.

In these embodiments, by performing the solid-liquid separation on the crystallized material and performing the washing and drying treatment on the separated solid material, a mixed crystal material of the first sulfide and the second sulfide with a relatively high purity can be obtained. The solid-liquid separation process and the washing and drying process are simple and convenient.

In order to further reduce the introduction of impurities, before concentrating and crystallizing the lithium sulfide and the second sulfide from the first reaction solution mixed with the reducing agent, the pH regulator, and the second sulfide, to obtain the sulfide composite material, the manufacturing method can also include: filtering the first reaction solution mixed with the reducing agent, the pH regulator, and the second sulfide using a filter element with a pore size of 20 nm to 50 nm to remove impurities in the first reaction solution mixed with the reducing agent, the pH regulator, and the second sulfide.

In some embodiments, the solid-liquid separation can be achieved by centrifugal separation. Using centrifugal separation to perform the solid-liquid separation on crystallized material is convenient and fast, while also reducing impurities.

In some embodiments, the separated solid material is washed with a first solvent. The first solvent can include methanol, ethanol, glycerol, or a combination thereof. A volume of the first solvent is 3 to 6 times the volume of the solid material. For example, the volume of the first solvent can be 3 times, 4 times, 5 times, or 6 times the volume of the solid material.

In these embodiments, washing the separated solid material with the first solvent can reduce the residual water. Additionally, by controlling the volume of the first solvent, the water in the solid material can be effectively washed off to further reduce the residual water.

In some embodiments, a temperature of the drying treatment is 50°C to 80°C, and a time period of the drying treatment is 3 h to 6 h. The method for the drying treatment can be vacuum drying or normal pressure drying under the protection of protective gas. For example, the temperature of the drying treatment can be 50°C, 51°C, 53°C, 55°C, 56°C, 58°C, 60°C, 62°C, 65°C, 67°C, 69°C, 70°C, 71°C, 74°C, 76°C, 78°C, 79°C , 80°C, etc., and the time period of the drying treatment can be 3h, 4h, 5h, 6h, etc. The protective gas used in the normal pressure drying can be selected from nitrogen, argon, helium, or a combination thereof.

In some embodiments, the residual amount (by mass fraction) of the first solvent in the solid material after the drying treatment is less than 0.3%.

Furthermore, the solvent used in the first reaction treatment in the S11 is not specifically limited, any solvent that can dissolve lithium sulfide and the second sulfide and can crystallize lithium sulfide and the second sulfide in proportion through concentration are within the protection scope of the present application.

In some embodiments, the solvent used in the first reaction treatment can include distilled water, deionized water, pure water, methanol, ethanol, glycerol, or a combination thereof. That is, the solvent in the first reaction solution can be selected from distilled water, deionized water, pure water, methanol, ethanol, glycerol, or a combination thereof.

In these embodiments, methanol, ethanol, and glycerol have relatively low boiling points, which facilitates subsequent concentration and crystallization.

In some embodiments, as shown in FIG. 1, the manufacturing method for the lithium supplement can further include:
S 13, mixing a carbon material with the sulfide composite material, and then manufacturing the lithium supplement through a second reaction treatment.

In these embodiments, the lithium supplement can be manufactured by mixing the carbon material with the sulfide composite material followed by the second reaction treatment. The second reaction treatment process is simple and can manufacture a carbon-coated material with a high purity.

The specific composition of the carbon material is not limited.

In some embodiments, the carbon material includes carbon nanotube (CNT) and/or graphene.

In some embodiments, the mass ratio of the sulfide composite material to the carbon material in the mixing can be (90-95): (5-10). For example, the mass ratio of the sulfide composite material to the carbon material in the mixing can be 90:5, 90:6, 90:7, 90:8, 90:9, 90:10, 91:5, 91:6, 91:7, 91:8, 91:9, 91:10, 92:5, 92:6, 92:7, 92:8, 92:9, 92:10, 95:5, 95:6, 95:7, 95:8, 95:9, 95:10, etc.

In some embodiments, the second reaction treatment includes grinding and calcination.

In these embodiments, through grinding and calcination treatments, on one hand, the sulfide composite material can be promoted to be further fused to manufacture a more uniformly mixed sulfide composite material; on the other hand, a carbon coating layer can be coated on the sulfide composite material, thereby improving the electron conductivity of the lithium supplement. By calcination under a protective atmosphere, the moisture and oxygen contents can be further controlled to reduce the hydrolysis and oxidation of the sulfide composite material.

In some embodiments, a time period of the grinding can be 1 h to 2 h. The grinding can be performed by ball milling to uniformly mix the carbon material with the mixed crystals of lithium sulfide and the second sulfide.

In some embodiments, a grinding ball used in the ball milling method can be a ceramic ball, and the material can be ground to a particle size of 2 µm to 10 µm.

In some embodiments, a temperature of the calcination can be 200°C to 300°C, and a time period of the calcination can be 5 h to 8 h. For example, the temperature of the calcination can be 200°C, 210°C, 220°C, 230°C, 240°C, 250°C, 260°C, 270°C, 280°C, 290°C, or 300°C, and the time period of the calcination can be 5 h, 6 h, 7 h, 8 h, etc.

Furthermore, in some embodiments, in order to further reduce the hydrolysis and oxidation of the sulfide composite material, during calcination, in the calcination furnace, the humidity is less than 0.1%, the oxygen content is less than 1 ppm, and the furnace pressure is 200 Pa to 400 Pa. Additionally, in order to further reduce the impurities introduced during the calcination, the manufacturing method can also include: timely discharging an exhaust gas outside of the furnace through an induced draft fan during the calcination, and cooling the material to a temperature of ≤50°C before discharging and after the calcination. Wherein the calcination can be performed under a protective atmosphere. The protective atmosphere can include nitrogen, argon, helium, or a combination thereof.

Furthermore, in order to reduce iron impurity in the lithium supplement and manufacture a lithium supplement that meets the requirements, after discharging the material, the manufacturing method can further include: performing sieving and iron-removing treatments on the discharged material to obtain the lithium supplement.

In order to prevent the hydrolysis and the oxidization of the sulfide composite material in the lithium supplement, the sieving and iron-removal treatments can be performed in a room with constant temperature and humidity. The room with constant temperature and humidity can have a humidity less than or equal to 10% and a temperature of 20°C to 30°C.

During sieving, a sieve of 100 to 200 mesh can be used for sieving to obtain the lithium supplement.

During the iron-removal, an electromagnetic iron remover can be used to remove iron.

The above steps from discharging to sieving can be performed by suction conveying.

In some embodiments, the manufacturing method for the lithium supplement provided in the present application is used to manufacture the lithium supplement as described above.

In the manufacturing method for the lithium supplement provided in the embodiments of the present application, the sulfide composite material with the high purity can be manufactured by manufacturing the first reaction solution including the first sulfide that includes lithium sulfide, then mixing the first reaction solution with the second sulfide in the presence of the reducing agent and the pH regulator, and then performing the first purification treatment. The manufacturing method is simple and convenient, and the obtained sulfide composite material has a high purity.

In the technical solutions of the embodiments of the present application, the sulfide composite material can be manufactured by compounding the second sulfide with the first sulfide. The manufacturing method is simple and easy to implement.

In the technical solutions of the embodiments of the present application, the first purification treatment process is simple and easy to implement, and can improve the purity of the sulfide composite material at low cost. By performing the solid-liquid separation on the crystallized material, and by washing and drying the separated solid material, a mixed crystal material of the first sulfide and the second sulfide with a relatively high purity can be obtained. By mixing the carbon material with the sulfide composite material and then performing the second reaction treatment, the lithium supplement can be manufactured. In addition, the processes such as solid-liquid separation, washing, drying, and second reaction treatment are simple and can manufacture the sulfide composite material with a relatively high purity, so as to obtain the lithium supplement with an improved product quality. Through grinding and calcination, on one hand, the sulfide composite material can be promoted to be further fused to manufacture a more uniformly mixed sulfide composite material; on the other hand, a carbon material can be coated on the sulfide composite material, so that a carbon coating layer can be formed on the surface of the sulfide composite material after calcination, thereby improving the electron conductivity of the lithium supplement. By calcining under the protective atmosphere, the moisture and oxygen contents can be further controlled during calcination, thereby improving the purity of the obtained lithium supplement.

In the technical solutions of the embodiments of the present application, by controlling the first reaction treatment to be performed at the temperature of 30°C to 60°C for the time period of 30 min to 60 min, it is beneficial to increase the reaction rate of the first sulfur source and the first lithium source, and make the reaction between the first sulfur source and the first lithium source sufficient. By the vacuum concentration, it is beneficial to increase the concentration rate and effectively reduce the concentration temperature, reducing the damage caused by high temperature to the sulfide composite material. In addition, by controlling the concentration temperature and the Baume degree of the concentrated solution after concentration, and by crystallizing and precipitating the first sulfide and the second sulfide by cooling, it is beneficial to increase the crystallization and precipitation rate of the first sulfide and the second sulfide, to sufficiently precipitate the crystals of the first sulfide and the second sulfide, and to reduce the precipitation of impurities.

In the technical solutions of the embodiments of the present application, by using the above-mentioned first sulfur source and first lithium source, barium sulfate precipitate, barium oxalate, and/or barium carbonate precipitate can be obtained, thereby reducing impurities in the first reaction solution. By controlling the purity of the first lithium source and the first sulfur source to be greater than or equal to 99.5%, it is beneficial to reduce the impurity content and improve the purity of the lithium supplement. By controlling the content of the magnetic foreign matter in the first lithium source and the first sulfur source to be less than 1 ppm, the introduction of magnetic foreign matter is reduced, reducing the battery performance attenuation caused by magnetic foreign matter when the lithium supplement is applied to the battery. The presence of the reducing agent and the hydroxide is conducive to the purification of the first sulfide and the second sulfide and the reduction of impurities, while the addition of the hydroxide is conducive to inhibiting the hydrolysis of the first sulfide and the second sulfide, and the addition of the reducing agent is conducive to effectively preventing the oxidation of sulfur ions, thereby maintaining the performance stability of the first sulfide and the second sulfide in the sulfide composite material. When hydrazine hydrate is used as a reducing agent, nitrogen is generated in the reaction, which is conducive to preventing the introduction of new impurities in the sulfide composite material. The pH regulator is a hydroxide, which is conducive to effectively inhibiting the hydrolysis of the corresponding metal sulfide and/or lithium sulfide.

In a third aspect, the embodiments of the present application provide a cathode plate, including a current collector and a cathode material disposed on at least one side of the current collector in a thickness direction thereof. The cathode material includes the lithium supplement as described in the first aspect.

In a fourth aspect, the embodiments of the present application provide a secondary battery, including a cathode plate, an anode plate, and a separator.

The cathode plate is the cathode plate as described in the third aspect.

Some specific examples are described below. It should be noted that the examples described below are exemplary and are only used to illustrate the present application and are not intended to limit the present application. Unless otherwise specified in the examples, any specific techniques or conditions are carried out in accordance with techniques or conditions described in the literatures in the art or as per the product specifications. Unless otherwise noted with the manufacturer, the reagents or instruments used are conventional products that can be purchased commercially.

### Example 1

The manufacturing method for the lithium supplement provided in Example 1 is as follows.

Barium sulfide, lithium sulfate, and methanol were mixed and reacted under stirring at a temperature of 45°C for 45 minutes to obtain a precipitate and a first reaction solution. After filtration, to the obtained first reaction solution, hydrazine hydrate with a concentration of 25% (mass fraction) and battery-grade lithium hydroxide were added, and then sodium sulfide (second sulfide) was added. After dissolving under stirring, a refined filtration was performed with a filter element of 30 nm to obtain a refined filtrate, which was then concentrated under vacuum at a temperature of 70 ± 1°C, until the final concentrated solution reached a Baume degree of 47.3. Then the final concentrated solution was cooled to a temperature of 20°C at a cooling rate of 13°C/h, to obtain crystals. The obtained crystals were centrifugally dried, washed with anhydrous methanol with a volume 5 times the volume of the crystal, and then dried under vacuum or nitrogen protection at a temperature of 70°C for a time period of 5 h. Once the methanol content among these crystals was less than 0.3% (mass fraction), the drying was completed, and a sulfide composite material was obtained. Subsequently, the sulfide composite material was mixed with graphene for a time period of 1.5 h at a mass ratio of 92:8. During mixing, ceramic balls were added and grinding was performed until the particle size of the material reached 6.1 µm. After the grinding was completed, the material was put into a nitrogen-protected atmosphere furnace for calcination. During calcination, the introduction flow of nitrogen was adjusted to maintain humidity in the furnace below 0.1%, oxygen content in the furnace below 1 ppm, and the pressure in the furnace at 300 Pa. The exhaust gas was discharged outside of the furnace through an induced draft fan. The calcination was performed at a temperature of 250°C for a time period of 6 h. After the calcination was completed, the material was cooled to a temperature of ≤50°C and then discharged. The discharged material was sieved with a sieve of 150 mesh, subjected to iron removal with an electromagnetic iron remover, and then packaged to obtain a lithium supplement. The sieving, iron removal, and packaging were all carried out in a room controlled at a constant temperature of 25±5°C and a constant humidity of ≤10%.

The barium sulfide and lithium sulfate both had a main component content of ≥99.5% (by mass fraction) and a magnetic foreign matter content of less than 1 ppm. The molar ratio of barium sulfide, lithium sulfate, hydrazine hydrate, and lithium hydroxide added was 1: 1.05:0.08:0.04. The molar ratio of lithium sulfide to sodium sulfide in the lithium supplement was 1: 0.18.

### Example 2

The manufacturing method for the lithium supplement provided in Example 2 is as follows.

Barium sulfide, lithium sulfate, and methanol were mixed and reacted under stirring at a temperature of 30°C for 30 minutes to obtain a precipitate and a first reaction solution. After filtration, to the obtained first reaction solution, hydrazine hydrate with a concentration of 20% (mass fraction) and battery-grade lithium hydroxide were added, and then sodium sulfide (second sulfide) was added. After dissolving under stirring, a refined filteration was performed with a filter element of 20 nm to obtain a refined filtrate, which was then concentrated under vacuum at a temperature of 50°C, until the final concentrated solution reached a Baume degree of 45. Then the final concentrated solution was cooled to a temperature of 10°C at a cooling rate of 10°C/h, to obtain crystals. The obtained crystals were centrifugally dried, washed with anhydrous methanol with a volume 6 times the volume of the crystal, and then dried under vacuum or nitrogen protection at a temperature of 50°C for a time period of 6 h. Once the methanol content among these crystals was less than 0.3% (mass fraction), the drying was completed, and a sulfide composite material was obtained. Subsequently, the sulfide composite material was mixed with CNT for a time period of 1 h at a mass ratio of 90: 10. During mixing, ceramic balls were added and grinding was performed, until the particle size of the material reached 2.6 µm. After the grinding was completed, the material was put into a nitrogen-protected atmosphere furnace for calcination. During calcination, the introduction flow of nitrogen was adjusted to have the humidity in the furnace below 0.1%, the oxygen content in the furnace below 1 ppm, and the pressure in the furnace at 200 Pa. The exhaust gas was discharged outside of the furnace through an induced draft fan. The calcination was performed at a temperature of 200°C for a time period of 5 h. After the calcination was completed, the material was cooled to a temperature of ≤50°C and then discharged. The discharged material was sieved with a sieve of 100 mesh, subjected to iron removal with an electromagnetic iron remover, and then packaged to obtain a lithium supplement. The sieving, iron removal, and packaging were all carried out in a room controlled at a constant temperature of 25±5°C and a constant humidity of ≤10%.

The barium sulfide and lithium sulfate both had a main component content of ≥99.5% (by mass fraction) and a magnetic foreign matter content of less than 1 ppm. The molar ratio of barium sulfide, lithium sulfate, reducing agent, and lithium hydroxide added was 1:1.0:0.05:0.02. The molar ratio of lithium sulfide to sodium sulfide in the lithium supplement was 1: 0.29.

### Example 3

The manufacturing method for the lithium supplement provided in Example 3 is as follows.

Barium sulfide, lithium sulfate, and methanol were mixed and reacted under stirring at a temperature of 60°C for 60 minutes to obtain a precipitate and a first reaction solution. After filtration, to the obtained first reaction solution, hydrazine hydrate with a concentration of 30% (mass fraction) and battery-grade lithium hydroxide were added, and then sodium sulfide (second sulfide) was added. After dissolving under stirring, a refined filteration was performed with a filter element of 50 nm to obtain a refined filtrate, which was then concentrated under vacuum at a temperature of 80°C, until the final concentrated solution reached a Baume degree of 50. Then the final concentrated solution was cooled to a temperature of 25°C at a cooling rate of 15°C/h, to obtain crystals. The obtained crystals were centrifugally dried, washed with anhydrous methanol with a volume 3 times the volume of the crystal, and then dried under vacuum or nitrogen protection at a temperature of 80°C for a time period of 3 h. Once the methanol content among these crystals was less than 0.3% (mass fraction), the drying was completed, and a sulfide composite material was obtained. Subsequently, the sulfide composite material was mixed with graphene for 2 h at a mass ratio of 95:5. During mixing, ceramic balls were added and grinding was performed, until the particle size of the material reached 10 µm. After the grinding was completed, the material was put into a nitrogen-protected atmosphere furnace for calcination. During calcination, the introduction flow of nitrogen was adjusted to have the humidity in the furnace below 0.1%, the oxygen content in the furnace below 1 ppm, and the pressure in the furnace at 400 Pa. The exhaust gas was discharged outside of the furnace through an induced draft fan. The calcination was performed at a temperature of 300°C for a time period of 8 h. After the calcination was completed, the material was cooled to a temperature of ≤50°C and then discharged. The discharged material was sieved with a sieve of 200 mesh, subjected to iron removal with an electromagnetic iron remover, and then packaged to obtain a lithium supplement. The sieving, iron removal, and packaging were all carried out in a room controlled at a constant temperature of 25±5°C and a constant humidity of ≤10%.

The above barium sulfide and lithium sulfate both had a main component content of ≥99.5% (by mass fraction) and a magnetic foreign matter content of less than 1 ppm. The molar ratio of barium sulfide, lithium sulfate, reducing agent, and lithium hydroxide added was 1:1.1:0.1:0.05. The molar ratio of lithium sulfide to sodium sulfide in the lithium supplement was 1: 0.1.

### Example 4

The manufacturing method for the lithium supplement provided in Example 4 is the same as the manufacturing method for the lithium supplement provided in Example 1, except that the molar ratio of barium sulfide, lithium sulfate, reducing agent, and lithium hydroxide added was 1:0.9:0.05:0.02.

### Example 5

The manufacturing method for the lithium supplement provided in Example 5 is the same as the manufacturing method for the lithium supplement provided in Example 1, except that the molar ratio of barium sulfide, lithium sulfate, reducing agent, and lithium hydroxide added was 1:1.0:0.04:0.02.

### Example 6

The manufacturing method for the lithium supplement provided in Example 6 is the same as the manufacturing method for the lithium supplement provided in Example 1, except that the molar ratio of barium sulfide, lithium sulfate, reducing agent, and lithium hydroxide added was 1:1.0:0.05:0.01.

### Example 7

The manufacturing method for the lithium supplement provided in Example 7 is the same as the manufacturing method for the lithium supplement provided in Example 1, except that hydrazine hydrate was replaced with sodium sulfite as the reducing agent.

### Example 8

The manufacturing method for the lithium supplement provided in Example 8 is the same as the manufacturing method for the lithium supplement provided in Example 1, except that lithium hydroxide was replaced with sodium hydroxide.

### Example 9

The manufacturing method for the lithium supplement provided in Example 9 is the same as the manufacturing method for the lithium supplement provided in Example 1, except that the molar ratio of barium sulfide to sodium sulfide was 1: 0.05.

### Example 10

The manufacturing method for the lithium supplement provided in Example 10 is the same as the manufacturing method for the lithium supplement provided in Example 1, except that the molar ratio of barium sulfide to sodium sulfide was 1: 0.32.

### Example 11

The manufacturing method for the lithium supplement provided in Example 11 is as follows.

Barium sulfide, lithium sulfate, and methanol were mixed and reacted under stirring at a temperature of 45°C for 45 minutes to obtain a precipitate and a first reaction solution. After filtration, to the obtained first reaction solution, hydrazine hydrate with a concentration of 25% (mass fraction) and battery-grade calcium hydroxide were added, and then calcium sulfide (second sulfide) was added. After dissolving under stirring, a refined filteration was performed with a filter element of 30 nm to obtain a refined filtrate, which was then concentrated under vacuum at a temperature of 70 ± 1°C, until the final concentrated solution reached a Baume degree of 47.3. Then the final concentrated solution was cooled to a temperature of 20°C at a cooling rate of 13°C/h, to obtain crystals. The obtained crystals were centrifugally dried, washed with anhydrous methanol with a volume 5 times the volume of the crystal, and then dried under vacuum or nitrogen protection at a temperature of 70°C for a time period of 5 h. Once the methanol content among these crystals was less than 0.3% (mass fraction), the drying was completed, and a sulfide composite material was obtained. Subsequently, the sulfide composite material was mixed with graphene for a time period of 1.5 h at a mass ratio of 92:8. During mixing, ceramic balls were added and grinding was performed, until the particle size of the material reached 6.1 µm. After the grinding was completed, the material was put into a nitrogen-protected atmosphere furnace for calcination. During calcination, the introduction flow of nitrogen was adjusted to have the humidity in the furnace below 0.1%, the oxygen content in the furnace below 1 ppm, and the pressure in the furnace at 300 Pa. The exhaust gas was discharged outside of the furnace through an induced draft fan. The calcination was performed at a temperature of 250°C for a time period of 6 h. After the calcination was completed, the material was cooled to a temperature of ≤50°C and then discharged. The discharged material was sieved with a sieve of 150 mesh, subjected to iron removal with an electromagnetic iron remover, and then packaged to obtain a lithium supplement. The sieving, iron removal, and packaging were all carried out in a room controlled at a constant temperature of 25±5°C and a constant humidity of ≤10%.

The barium sulfide and lithium sulfate both had a main component content of ≥99.5% (by mass fraction) and a magnetic foreign matter content of less than 1 ppm. The molar ratio of barium sulfide, lithium sulfate, reducing agent, and calcium hydroxide added was 1:1.05:0.08:0.04. The molar ratio of lithium sulfide to calcium sulfide was 1:0.18.

### Example 12

The manufacturing method for the lithium supplement provided in Example 12 is as follows.

Barium sulfide, lithium sulfate, and methanol were mixed and reacted under stirring at 45°C for 45 minutes to obtain a precipitate and a first reaction solution. After filtration, to the obtained first reaction solution, hydrazine hydrate with a concentration of 25% (mass fraction) and battery-grade potassium hydroxide were added, and then potassium sulfide (second sulfide) was added. After dissolving under stirring, a refined filteration was performed with a filter element of 30 nm to obtain a refined filtrate, which was then concentrated under vacuum at a temperature of 70± 1°C, until the final concentrated solution reached a Baume degree of 47.3. Then the final concentrated solution was cooled to a temperature of 20°C at a cooling rate of 13°C/h, to obtain crystals. The obtained crystals were centrifugally dried, washed with anhydrous methanol with a volume 5 times the volume of the crystal, and then dried under vacuum or nitrogen protection at a temperature of 70°C for a time period of 5 h. Once the methanol content among these crystals was less than 0.3% (mass fraction), the drying was completed, and a sulfide composite material was obtained. Subsequently, the sulfide composite material was mixed with graphene for a time period of 1.5 h at a mass ratio of 92:8. During mixing, ceramic balls were added and grinding was performed, until the particle size of the material reached 6.1 µm. After the grinding was completed, the material was put into a nitrogen-protected atmosphere furnace for calcination. During calcination, the introduction flow of nitrogen was adjusted to have the humidity in the furnace below 0.1%, the oxygen content in the furnace below 1 ppm, the pressure in the furnace at 300 Pa. The exhaust gas was discharged outside of the furnace through an induced draft fan. The calcination was performed at a temperature of 250°C for a time period of 6 h. After the calcination was completed, the material was cooled to a temperature of ≤50°C and then discharged. The discharged material was sieved with a sieve of 150 mesh, subjected to iron removal with an electromagnetic iron remover, and then packaged to obtain a lithium supplement. The sieving, iron removal, and packaging were all carried out in a room controlled at a constant temperature of 25±5°C and a constant humidity of ≤10%.

The barium sulfide and lithium sulfate both had a main component content of ≥99.5% (by mass fraction) and a magnetic foreign matter content of less than 1 ppm. The molar ratio of barium sulfide, lithium sulfate, reducing agent, and potassium hydroxide added was 1: 1.05:0.08:0.04. The molar ratio of lithium sulfide to potassium sulfide was 1:0.18.

### Comparative Example 1

The manufacturing method for the lithium supplement provided in Comparative Example 1 is as follows.

Barium sulfide, lithium sulfate, and methanol were mixed and reacted under stirring at a temperature of 45°C for 45 minutes to obtain a precipitate and a first reaction solution. After filtration, hydrazine hydrate with a concentration of 25% (mass fraction) and battery-grade lithium hydroxide were added to the obtained first reaction solution. After dissolving under stirring, a refined filteration was performed with a filter element of 30 nm to obtain a refined filtrate, which was then concentrated under vacuum at a temperature of 70 ± 1°C, until the final concentrated solution reached a Baume degree of 47.3. Then the final concentrated solution was cooled to a temperature of 20°C at a cooling rate of 13°C/h, to obtain crystals. The obtained crystals were centrifugally dried, washed with anhydrous methanol with a volume 5 times the volume of the crystal, and then dried under vacuum or nitrogen protection at a temperature of 70°C for a time period of 5 h. Once the methanol content among these crystals was less than 0.3% (mass fraction), the drying was completed and a lithium sulfide was obtained. After drying, the lithium sulfide was mixed with graphene for a time period of 1.5 h at a mass ratio of 92:8. During mixing, ceramic balls were added and grinding was performed, until the particle size of the material reached 6.1 µm. After the grinding was completed, the material was put into a nitrogen-protected atmosphere furnace for calcination. During calcination, the introduction flow of nitrogen was adjusted to have the humidity in the furnace below 0.1%, the oxygen content in the furnace below 1 ppm, and the pressure in the furnace at 300 Pa. The exhaust gas was discharged outside of the furnace through an induced draft fan. The calcination was performed at a temperature of 250°C for a time period of 6 h. After the calcination was completed, the material was cooled to a temperature of ≤50°C and then discharged. The discharged material was sieved with a sieve of 150 mesh, subjected to iron removal with an electromagnetic iron remover, and then packaged to obtain a lithium supplement. The sieving, iron removal, and packaging were all carried out in a room with a constant temperature of 25±5°C and a constant humidity of ≤10%.

The barium sulfide and lithium sulfate both had a main component content of ≥99.5% (by mass fraction) and a magnetic foreign matter content of less than 1 ppm. The molar ratio of barium sulfide, lithium sulfate, hydrazine hydrate, and lithium hydroxide added was 1: 1.05:0.08:0.04.

### Test Methods and Test Results

### 1. Test of chemical component indicators and physicochemical indicators of lithium supplements

The lithium supplements provided in Examples 1 to 12 and Comparative Example 1 were tested for chemical component indicators and physicochemical indicators, and the specific test results are shown in Table 1 below.

**Table 1**

| | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Com p. Ex. 1 |
|---|---|---|---|---|---|---|---|---|---|---|---|---|---|
| magneti c foreign matter | 0.12 ppm | 0.17 ppm | 0.14 ppm | 0.13 ppm | 0.12 ppm | 0.13 ppm | 0.13 ppm | 0.12 ppm | 0.11 ppm | 0.12 ppm | 0.11 ppm | 0.11 ppm | 0.12 ppm |
| moisture | 215 ppm | 312 ppm | 296 ppm | 201 ppm | 459 ppm | 368 ppm | 247 ppm | 238 ppm | 527 ppm | 127 ppm | 205 ppm | 211 ppm | 987 ppm |
| pH | 10.9 5 | 11.3 2 | 11.11 | 11.5 7 | 12.7 8 | / | 10.9 9 | 10.7 8 | 12.0 8 | 10.1 1 | 10.9 9 | 10.8 1 | 11.7 8 |
| LiOH | 456 ppm | 657 ppm | 593 ppm | 698 ppm | 1068 ppm | 8.70 % | 426 ppm | 227 ppm | 538 ppm | 315 ppm | 489 ppm | 426 ppm | 765 ppm |
| compact ion density | 2.13 g/mL | 2.01 g/mL | 2.03 g/mL | 2.14 g/mL | 2.01 g/mL | 2.11 g/mL | 2.15 g/mL | 2.14 g/mL | 2.12 g/mL | 2.14 g/mL | 2.13 g/mL | 2.15 g/mL | 2.11 g/m L |
| Ca | 35.7 ppm | 30.1 ppm | 34.7 ppm | 32.5 ppm | 33.5 ppm | 32.6 ppm | 32.4 ppm | 31.2 ppm | 33.5 ppm | 37.4 ppm | / | 36.3 ppm | 30.1 ppm |
| Ba | 8.5 ppm | 3.5 ppm | 1.8 ppm | 12.9 ppm | 9.6 ppm | 9.5 ppm | 8.1 ppm | 8.9 ppm | 8.2 ppm | 8.7 ppm | 8.2 ppm | 8.3 ppm | 8.0 ppm |
| Mg | 45.6 ppm | 38.1 ppm | 27.5 ppm | 45.6 ppm | 43.7 ppm | 41.5 ppm | 40.7 ppm | 41.6 ppm | 45.2 ppm | 46.8 ppm | 46.2 ppm | 45.1 ppm | 42.9 ppm |
| Cu | 0.2 ppm | 0.1 ppm | 0.1 ppm | 0.1 ppm | 0.2 ppm | 0.1 ppm | 0.2 ppm | 0.1 ppm | 0.2 ppm | 0.1 ppm | 0.1 ppm | 0.1 ppm | 0.1 ppm |
| Zn | 7.5 ppm | 4.6 ppm | 6.3 ppm | 7.1 ppm | 7.9 ppm | 7.2 ppm | 6.7 ppm | 6.8 ppm | 7.9 ppm | 4.2 ppm | 6.9 ppm | 8.1 ppm | 7.1 ppm |
| Ni | 0.2 ppm | 0.3 ppm | 0.2 ppm | 0.2 ppm | 0.2 ppm | 0.2 ppm | 0.2 ppm | 0.1 ppm | 0.2 ppm | 0.1 ppm | 0.1 ppm | 0.2 ppm | 0.2 ppm |
| Co | 0.7 ppm | 1.1 ppm | 0.9 ppm | 0.6 ppm | 0.6 ppm | 0.7 ppm | 0.5 ppm | 0.2 ppm | 0.3 ppm | 0.6 ppm | 0.3 ppm | 0.5 ppm | 0.5 ppm |
| mass proporti on of lithium sulfide | 70.0 % | 60.0 % | 80.0 % | 68.5 % | 67.7 % | 60.2 % | 70.3 % | 68.8 % | 84.8 % | 59.6 % | 69.1 % | 71.8 % | 92.0 % |
| mass proporti on of | 22.0 % | 30.0 % | 15.0 % | 23.5 % | 24.3 % | 23.1 % | 21.7 % | 23.2 % | 7.2 % | 32.4 % | 22.9 % | 20.2 % | 0 % |
| second sulfide | | | | | | | | | | | | | |
| mass proporti on of carbon | 8.0 % | 10.0 % | 5.0 % | 8.0 % | 8.0 % | 8.0 % | 8.0 % | 8.0 % | 8.0 % | 8.0 % | 8.0 % | 8.0 % | 8.0 % |
| D50 particle size | 6.9 µm | 3.2 µm | 11.5 µm | 7.2 µm | 6.7 µm | 6.9 µm | 6.2 µm | 6.1 µm | 6.5 µm | 7.5 µm | 6.2 µm | 6.7 µm | 7.2 µm |
| BET | 6.2 m²/g | 10 m²/g | 2 m²/g | 6.1 m²/g | 6.8 m²/g | 6.2 m²/g | 6.4 m²/g | 6.3 m²/g | 6.5 m²/g | 6.1 m²/g | 6.8 m²/g | 6.7 m²/g | 7.2 m²/g |

In the above Table 1, the contents of calcium, magnesium, zinc, copper, nickel, and cobalt in the lithium supplements were determined by inductively coupled plasma atomic emission spectrometry. The contents of barium in the lithium supplements were determined by sulfuric acid titration. The contents of lithium hydroxide in the lithium supplements were determined by automatic potentiometric titration.

In Table 1, the moisture contents in the lithium supplements were determined by Karl Fischcr (KF) titration. The magnetic foreign matters in the lithium supplements were collected by a magnet and then dissolved with aqua regia, and tested on an atomic absorption spectrometer. The BET specific surface areas were determined by nitrogen multi-point adsorption method with a BET tester. The pH values of the lithium supplements were determined by acid-base potentiometric titration method with a pH meter. The D50 particle sizes were determined by a laser particle size distribution analyzer. The D50 particle size represents the corresponding particle size at which the cumulative volume distribution percentage of the lithium supplement reaches 50%.

In Table 1, the compaction densities were determined by a compaction density meter under a test pressure of 3 T, with a compressing time of 30 s.

It can be seen from Table 1 that, the D50 particle sizes of the lithium supplements provided by Examples 1 to 12 were between 3.2 µm and 11.5 µm, and most of them were concentrated between 6.2 µm and 7.2 µm. The specific surface areas of the lithium supplements provided by Examples 1 to 12 were between 2 m²/g and 10 m²/g, and most of them were concentrated between 6.1 m²/g and 6.8 m²/g. The compaction densities of the lithium supplements provided by Examples 1 to 12 were between 2.01 g/mL and 2.15 g/mL. Those lithium supplements had suitable D50 particle size, specific surface area, and compaction density, which was beneficial to improving the energy density of the lithium supplement when it was used in secondary battery and providing a better lithium supplementation effect.

The lithium supplements provided in Examples 1 to 12 had low contents of magnetic foreign matter and moisture. For example, the content of magnetic foreign matter was less than 0.18 ppm, even as low as 0.12 ppm, and the content of moisture was less than 550 ppm, even as low as 201 ppm, which was beneficial to reducing the attenuation of the performance of the lithium supplement caused by the introduction of magnetic foreign matter and moisture.

The pH values of the lithium supplements provided in Examples 1 to 5 and Examples 7 to 12 were all controlled below 12.8, and the contents of LiOH were able to be controlled substantially at the ppm level, which can inhibit the generation of LiOH due to the hydrolysis of lithium sulfide to a certain extent, thereby maintaining a high lithium supplementation effect and preventing a decrease in the initial charge-discharge specific capacity.

The lithium supplement provided in Example 6 had a relatively high content of LiOH, reaching 8.70%. This may be attributed to less amount of pH regulator, which makes it difficult to inhibit the hydrolysis of lithium sulfide during the reaction, resulting in the generation of more LiOH and an increase in pH value.

Comparing Example 4 with Example 1, it was found that when less lithium sulfate was provided in Example 4, the Ba content of the lithium supplement was increased, indicating that impurities were more easily introduced into the lithium supplement when a smaller amount of the first lithium source was added.

Comparing Example 5 with Example 1, it was found that when less reducing agent was provided in Example 5, the moisture content, the pH value, and the LiOH content of the lithium supplement were increased, indicating that a small amount of lithium sulfide and sodium sulfide underwent oxidation and hydrolysis, leading to the introduction of the impurity LiOH.

Comparing Example 6 with Example 1, it was found that when less pH regulator was provided in Example 6, it was difficult to inhibit the hydrolysis of lithium sulfide during the reaction, resulting in the generation of more LiOH and an increase in pH value.

Comparing Example 9 with Example 1, it was found that when less sodium sulfide was provided in Example 9, the moisture content and the pH value of the lithium supplement were significantly increased, and there was also a rising trend in LiOH content, indicating that the addition of sodium sulfide had an inhibitory effect on both the moisture content and the LiOH content, and can help regulate the pH value.

Comparing Example 10 with Example 1, it was found that when more sodium sulfide was provided in Example 10, the pH value and the moisture content of the lithium supplement were significantly reduced and the LiOH content was also reduced, also indicating that sodium sulfide had an inhibitory effect on the pH value, the moisture content, and the LiOH content of the lithium supplement.

### 2. Test of electrical performance indicators of lithium supplements

(1) The lithium supplements provided in Examples 1 to 12 and Comparative Example 1 were each used as a cathode active material and mixed with Super P (SP) and polyvinylidene difluoride (PVDF) in a mass ratio of 80:10:10 to manufacture a cathode material. The cathode material was coated onto a cathode current collector. Subsequently, a button cell was assembled using an electrolyte of 1 mol/L lithium hexafluorophosphate and a lithium plate as the anode. The button cell underwent a charge and discharge test within a voltage range of 2 V to 4.0 V at a rate of 0.1 C. The test results are shown in Table 2 below:

**Table 2**

| | Initial charge specific capacity at 0.1 C | Initial discharge specific capacity at 0.1 C |
|---|---|---|
| Ex. 1 | 645.7 mAh/g | 35.7 mAh/g |
| Ex. 2 | 627.4 mAh/g | 25.6 mAh/g |
| Ex. 3 | 637.1 mAh/g | 40.2 mAh/g |
| Ex. 4 | 594.5 mAh/g | 18.7 mAh/g |
| Ex. 5 | 587.2 mAh/g | 12.8 mAh/g |
| Ex. 6 | 313.4 mAh/g | 20.5 mAh/g |
| Ex. 7 | 640.4 mAh/g | 34.9 mAh/g |
| Ex. 8 | 635.8 mAh/g | 30.4 mAh/g |
| Ex. 9 | 650.7 mAh/g | 26.4 mAh/g |
| Ex. 10 | 589.4 mAh/g | 40.6 mAh/g |
| Ex. 11 | 604.7 mAh/g | 27.9 mAh/g |
| Ex. 12 | 653.5 mAh/g | 30.6 mAh/g |
| Comp. Ex. 1 | 689.5 mAh/g | 50.7 mAh/g |

It can be seen from Table 2 that, the initial charge specific capacities and the initial discharge specific capacities in Examples 1 to 12, where the lithium supplements provided were composite materials of lithium sulfide and the second sulfide, were decreased somewhat compared to Comparative Example 1. From Table 2 in combination with Table 1, it can be seen that in Examples 1 to 3, Examples 7 to 9, and Examples 11 to 12, where the molar ratios of the reducing agent, the hydroxide ion in the hydroxide, the lithium sulfide, and the sulfur element in the second sulfide were (0.05 to 0.1): (0.02 to 0.05): (1.0 to 1.1): (0.1 to 0.31), the initial charge specific capacities of the lithium supplements provided in the present application remained above 600 mAh/g, showing the initial charge specific capacities and the initial discharge specific capacities comparable to those in Comparative Example 1, while good lithium supplementation effects of the lithium supplements were maintained.

By comparing Example 4 with Comparative Example 1, it can be seen that the lower amount of lithium sulfate provided in Example 4 led to a certain degree of introduction of barium sulfide impurity and a reduction in the content of lithium sulfide, resulting in a certain degree of decrease in both the initial charge specific capacity and the initial discharge specific capacity of the lithium supplement.

By comparing Example 5 with Comparative Example 1, it can be seen that the lower amount of reducing agent provided in Example 5 led to a certain degree of hydrolysis and oxidation of lithium sulfide and sodium sulfide, resulting in a decrease in the initial charge specific capacity and the initial discharge specific capacity of the lithium supplement.

By comparing Example 6 with Comparative Example 1, it can be seen that the lower amount of lithium hydroxide provided in Example 6 led to hydrolysis of a large amount of lithium sulfide and generation of a large amount of lithium hydroxide, resulting in a significant decrease in the initial charge specific capacity and the initial discharge specific capacity of the lithium supplement.

(2) The lithium supplements provided in the above-mentioned Examples 1 to 12 and the lithium supplement provided in Comparative Example 1 were each mixed with lithium iron phosphate at a mass ratio of 3:97 to obtain a mixture, which, along with SP and PVDF in a mass ratio of 90:5:5, was then manufactured into a cathode plate. Subsequently, a button cell was assembled following the steps described in (1). The button cell was firstly charged at 25°C with a voltage of 2 V to 4.0 V at a rate of 1 C, and then discharged at 1 C. From the second cycle, the button cell was cycled with a voltage of 2 V to 3.75 V After 100 cycles of charge and discharge of the button cell at 25°C and 1 C, the separator was disassembled from the button cell, and the black spots on the separator were counted. The numbers of black spots on the separators of the button cells corresponding to the lithium supplements in Examples 1 to 3 were 1, 1, and 2, respectively, while the number of black spots on the separator of the button cell corresponding to the lithium supplement in Comparative Example 1was 23. The dissolved elemental sulfur content in the electrolyte of the button cell was measured. The measurement results are shown in Table 3 below.

**Table 3**

| Group | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Comp. Ex. 1 |
|---|---|---|---|---|---|---|---|---|---|---|---|---|---|
| elemental sulfur content (ppm) | <5 | <5 | <5 | <5 | 78 | 128 | <5 | <5 | 289 | <5 | 21 | 18 | 1058 |

It can be seen from Table 3 that the elemental sulfur content in the electrolyte of the button cells having the lithium supplements provided in Examples 1 to 12 did not exceed 300 ppm, which was much lower than the elemental sulfur content in the electrolyte of Comparative Example 1 (1058 ppm), indicating that the lithium supplements provided in Examples 1 to 12 can reduce the generation of elemental sulfur to a large extent, thereby improving the overall battery performance.

A comparison between the button cell having the lithium supplement provided in Example 5 and the button cell having the lithium supplement provided in Example 1 shows that, a lower amount of the reducing agent provided in Example 5 led to a certain degree of the hydrolysis and the oxidation of lithium sulfide and sodium sulfide, resulting in a decrease in the amount of sulfur element fixed in sodium sulfide, and an increase in the elemental sulfur content in the electrolyte of the button cell having the lithium supplement provided in Example 5.

A comparison between the button cell having the lithium supplement provided in Example 6 and the button cell having the lithium supplement provided in Example 1 shows that, a lower amount of lithium hydroxide provided in Example 6 led to the hydrolysis of a large amount of lithium sulfide and the hydrolysis of a part of the sodium sulfide, resulting in a significant increase in the elemental sulfur content in the electrolyte of the button cell having the lithium supplement provided in Example 6 compared to the elemental sulfur content in the electrolyte of the button cell having the lithium supplement provided in Example 1.

A comparison between the button cell having the lithium supplement provided in Example 9 and the button cell having the lithium supplement provided in Example 1 shows that, when less sodium sulfide is provided in Example 9, lithium sulfide accounts for a relatively large proportion, and the relatively small amount of sodium sulfide makes it difficult to fix the sulfur element to the greatest extent, resulting in an increase in the elemental sulfur content in the electrolyte of the button cell having the lithium supplement provided in Example 9 compared to the elemental sulfur content in the electrolyte of the button cell having the lithium supplement provided in Example 1.

## Claims

1. A lithium supplement, wherein the lithium supplement comprises a sulfide composite material, and the sulfide composite material comprises a first sulfide and a second sulfide doped in the first sulfide; wherein the first sulfide comprises lithium sulfide, and the second sulfide is selected from a metal sulfide other than lithium sulfide, an organic sulfide, or a combination thereof.

2. The lithium supplement of claim 1, wherein,
the metal sulfide comprises sodium sulfide, calcium sulfide, potassium sulfide, or a combination thereof; and/or
the organic sulfide comprises ammonium sulfide, sodium dithiocarbamate, sodium potassium dithiocarbamate, or a combination thereof.

3. The lithium supplement of any one of the preceding claims, wherein a mass ratio of the first sulfide to the second sulfide in the sulfide composite material is (60 to 80):(15 to 30).

4. The lithium supplement of any one of the preceding claims, wherein a molar ratio of sulfur element in the second sulfide to sulfur element in the first sulfide in the sulfide composite material is (0.1 to 0.31):(1.0 to 1.1).

5. The lithium supplement of any one of the preceding claims, further comprising a carbon coating layer coated on a surface of the sulfide composite material;
wherein a mass proportion of the carbon coating layer in the lithium supplement is 5% to 10%.

6. The lithium supplement of any one of the preceding claims, wherein the lithium supplement has a D50 particle size of 3 µm to 12 µm, or a specific surface area of 2 m²/g to 10 m²/g, or a compaction density of 2.01 g/mL to 2.15 g/mL;
optionally, a content of a magnetic foreign matter in the lithium supplement is 0.11 ppm to 0.20 ppm.

7. A manufacturing method for a lithium supplement, wherein the manufacturing method comprises:
mixing a first lithium source and a first sulfur source, and then obtaining a first reaction solution through a first reaction treatment; and
mixing the first reaction solution with a reducing agent, a pH regulator and a second sulfide, and then obtaining a sulfide composite material through a first purification treatment;
wherein the first reaction solution comprises a first sulfide, the first sulfide comprises lithium sulfide, and the second sulfide is selected from a metal sulfide other than lithium sulfide, an organic sulfide, or a combination thereof.

8. The manufacturing method for the lithium supplement of claim 7, wherein the first purification treatment comprises the following steps:
concentrating the first reaction solution mixed with the reducing agent, the pH regulator and the second sulfide, and obtaining crystals of the first sulfide and the second sulfide; and/or the manufacturing method for the lithium supplement further comprises:
performing a solid-liquid separation, preferably, a centrifugal separation, on the crystallized material, and performing a washing and drying treatment on the separated solid material; and/or the manufacturing method for the lithium supplement further comprises:
mixing a carbon material with the sulfide composite material, and then manufacturing the lithium supplement through a second reaction treatment; and/or
the second reaction treatment comprises grinding and calcination, a time period of the grinding is 1h to 2h, and the calcination is performed in a protective atmosphere at a temperature of 200°C to 300°C for a time period of 5 h to 8h,
optionally, before the concentrating the first reaction solution mixed with the reducing agent, the pH regulator, and the second sulfide, the manufacturing method further comprises filtering the first reaction solution mixed with the reducing agent, the pH regulator, and the second sulfide using a filter element with a pore size of 20 nm to 50 nm to remove impurities in the first reaction solution mixed with the reducing agent, the pH regulator, and the second sulfide.

9. The manufacturing method for the lithium supplement of any one of claims 7 to 8, satisfying at least one of the following conditions:
(1) the first reaction treatment is performed at a temperature of 30°C to 60°C for a time period of 30 min to 60 min;
(2) the concentration is vacuum concentration, a temperature of the concentration is 50°C to 80°C, and/or a Baume degree of a concentrated solution obtained by the concentration is 45 to 50;
(3) the crystals of the first sulfide and the second sulfide are obtained by performing a cooling treatment on the concentrated solution, preferably, at a cooling rate of 10°C/h to 15°C/h; or
(4) a mass ratio of the sulfide composite material to the carbon material is (90 to 95):(5 to 10).

10. The manufacturing method for the lithium supplement of any one of claims 7 to 9, satisfying at least one of the following conditions:
(1) the first lithium source comprises lithium sulfate, lithium oxalate, lithium carbonate, or a combination thereof, and the first sulfur source comprises barium sulfide, calcium sulfide, or a combination thereof;
(2) the first lithium source and the first sulfur source both have a purity greater than or equal to 99.5%;
(3) the first lithium source and the first sulfur source both have a magnetic foreign matter content of less than 1 ppm;
(4) the reducing agent comprises hydrazine hydrate, sulfite, or a combination thereof;
(5) the pH regulator comprises a hydroxide selected from lithium hydroxide and/or a hydroxide of a metal corresponding to the metal sulfide other than lithium sulfide; or
(6) the carbon material comprises carbon nanotube (CNT) and/or graphene.

11. The manufacturing method for the lithium supplement of any one of claims 7 to 10, wherein in the mixing the first lithium source and the first sulfur source, a molar ratio of sulfur element in the first sulfur source to lithium element in the first lithium source is 0.5:(1.0 to 1.1).

12. The manufacturing method for the lithium supplement of any one of claims 7 to 11, wherein the reducing agent comprises hydrazine hydrate; in the mixing the first reaction solution with the reducing agent, the pH regulator, and the second sulfide, a hydrazine hydrate solution is mixed with the first reaction solution, the pH regulator, and the second sulfide; and a mass fraction of hydrazine hydrate in the hydrazine hydrate solution is 20% to 30%.

13. The manufacturing method for the lithium supplement of any one of claims 7 to 12, wherein in the mixing the first reaction solution with the reducing agent, a molar ratio of the reducing agent, a hydroxide ion in the pH regulator, lithium sulfide in the first reaction solution, and the sulfur element in the second sulfide is (0.05-0.1): (0.02-0.05): (1.0-1.1): (0.1-0.3 1).

14. A cathode plate, wherein the cathode plate comprises a current collector and a cathode material disposed on at least one side of the current collector in a thickness direction thereof, and wherein the cathode material comprises the lithium supplement of any one of claims 1 to 6.

15. A secondary battery, wherein the secondary comprises a cathode plate of claim 14, an anode plate, and a separator.
